# FASCICULE DE BREVET EUROPEEN

(11) **EP 2 556 276 B1**
(45) Date de publication et mention de la délivrance du brevet: **19.03.2014**
(21) Numéro de dépôt: 11719597.4
(22) Date de dépôt: 08.04.2011
(51) Int. Cl.: F16H 61/04, F16H 61/688

(54) **PROCEDE ET DISPOSITIF DE REGULATION DE L'EFFORT ACTIONNEUR LORS D'UN CHANGEMENT DE RAPPORT DE BOITE DE VITESSES MANUELLE PILOTEE**
VERFAHREN UND VORRICHTUNG ZUR EINSTELLUNG DER BETÄTIGERKRAFT DER GANGSCHALTUNG BEI EINEM HALBAUTOMATIKGETRIEBE
METHOD AND DEVICE FOR ADJUSTING THE ACTUATOR FORCE WHEN SHIFTING GEARS IN A SEMI-AUTOMATIC TRANSMISSION

(30) Priorité: 09.04.2010 FR 1052695
(43) Date de publication de la demande: 13.02.2013
(73) Titulaire: Peugeot Citroën Automobiles SA, 78140 Vélizy-Villacoublay (FR)
(72) Inventeur: GAGNE, Pierre, F-92000 Nanterre (FR)
(74) Mandataire: Rosenberg, Muriel Sylvie
(86) Numéro de dépôt international: PCT/FR2011/050803
(87) Numéro de publication internationale: WO 2011/124866

(56) Documents cités:
- EP-A1- 1 672 253
- EP-A2- 1 505 320
- DE-A1- 10 033 811
- DE-A1- 19 953 937
- US-A1- 2008 215 213

## Description

La présente invention concerne en général, le pilotage d'une boîte de vitesses manuelle pilotée appelée également « BVMP » (acronyme de « boîte de vitesses manuelle pilotée ») simple ou double embrayage, et concerne plus particulièrement un procédé et un dispositif de régulation de l'effort appliqué par l'actionneur de la BVMP lors d'un changement de rapport pour optimiser les changements de rapport afin de gagner en prestations et en fiabilité.

Dans l'état de la technique, une boîte de vitesses permet d'adapter le couple moteur disponible, au couple nécessaire au déplacement du véhicule. Pendant le changement de rapport, une telle boîte de vitesses n'est plus en prise avec le moteur, autrement dit, elle est découplée du moteur, l'embrayage étant ouvert et un rapport étant engagé. Un autre rapport de la boîte de vitesses doit être engagé, avant de refermer l'embrayage et ainsi assurer la traction du véhicule.

Une boîte de vitesses pilotée (BVMP) est une boîte de vitesses traditionnelle mais dont le passage des rapports de vitesses se fait automatiquement grâce à un embrayage et un actionneur pilotés par un calculateur électronique. La boîte de vitesses pilotée offre plusieurs modes de pilotage. En effet, elle comporte un mode totalement automatique qui passe les rapports successifs et rétrograde à la place du conducteur. Elle comporte également un mode semi-manuel, dans lequel le conducteur sollicite un changement de rapport de vitesse, puis c'est le calculateur qui pilote successivement une phase de débrayage d'un premier embrayage, une phase de décrabotage du rapport engagé, une phase de synchronisation du rapport souhaité par le conducteur, une phase de crabotage du rapport souhaité et une phase de fermeture progressive de l'embrayage du second embrayage avec reprise du couple moteur.

Une boîte de vitesses pilotée à double embrayage, est une boîte de vitesses pilotée améliorée en termes d'agrément de passage des rapports de vitesse. Elle reprend l'architecture mécanique d'une boîte de vitesses manuelle pilotée mono-embrayage, scindée en deux demi-boîtes. Les deux demi-boîtes sont configurées de telle sorte que l'une d'elle sert pour les rapports de vitesse pairs et l'autre est employée pour les rapports de vitesse impairs.

Une telle boîte ainsi que les organes qu'elle renferme sont considérés connus et ne seront donc pas décrits en détail.

La boîte de vitesses pilotée à double embrayage comporte au moins deux arbres primaires, couplés chacun à l'arbre du moteur par l'intermédiaire de leur embrayage respectif. Le premier arbre primaire est couplé à un premier arbre secondaire par l'engagement d'au moins un rapport de démultiplication définissant une première vitesse. Le deuxième arbre primaire est couplé à un deuxième arbre secondaire par l'engagement d'au moins un rapport de démultiplication définissant une deuxième vitesse.

Un des problèmes de ce type de boîte de vitesses est l'engagement du rapport de la demi-boîte de vitesses qui n'est pas en prise. En effet, le besoin en réactivité de la boîte de vitesses nécessite une faible durée d'engagement de rapport. Or, lors d'un engagement, la phase de synchronisation génère un couple de friction qui synchronise le pignon fou du rapport que l'on cherche à engager avec le manchon de synchronisation lié à l'arbre secondaire. La phase de synchronisation est réalisée par l'actionneur qui exerce un effort non mesuré sur le synchroniseur afin d'égaliser les régimes. Si les efforts appliqués sont trop importants, il y a un risque de détérioration de la mécanique interne de la boîte de vitesses (casse de fourchettes, casse de synchroniseur, ...). Ce couple de friction s'applique sur le pignon fou sollicité, donc sur l'arbre primaire, dont le régime de rotation évolue. Ce couple s'applique également sur le manchon, donc à l'arbre secondaire, au différentiel puis aux roues du véhicule. Ce couple perturbe donc l'accélération du véhicule.

Cette perturbation peut être perceptible par le conducteur et les passagers. Par exemple, pour un effort de synchronisation de 600 N à la fourchette (valeur type en BVMP), appliqué sur un synchroniseur triple cône ayant une capacité de conversion Effort/Couple de 0,08 N.m par N, on obtient un couple de friction de 48 N.m. Avec une démultiplication de pont de 4, un rayon de roue de 0,3 m et une masse de véhicule de 1200 kg, la perturbation d'accélération du véhicule est de 0,533 m/s², ce qui est une valeur importante (en regard de l'accélération lors d'un décollage du véhicule, c'est-à-dire de passage d'une vitesse nulle à une vitesse non nulle, qui est de l'ordre de 2 m/s²). Le document EP 1 672 253 A1 divulgue un procédé selon le préambule de la revendication 1 et un dispositif selon le préambule de la revendication 6.

La présente invention vise à remédier à ces inconvénients.

A cet effet, selon un premier aspect, la présente invention vise un procédé de régulation de l'effort d'un actionneur de synchroniseur de boîte de vitesses manuelle pilotée à double embrayage selon la revendication 1.

On évite ainsi les sollicitations excessives de la commande de la boîte de vitesses, tout en optimisant la durée de changement de rapport en réduisant la durée de la phase de synchronisation.

Selon des modes de réalisation, au cours de l'étape d'estimation, on effectue une étape de détermination de l'accélération de l'arbre primaire.

En effet, l'effort appliqué par l'actionneur et la perturbation d'accélération sont liés à cette accélération et sa détermination rend donc plus précis le fonctionnement de l'actionneur.

Selon des modes de réalisation, au cours de l'étape d'estimation, on effectue une étape de détermination du couple du synchroniseur concerné par le changement de rapport lors de la phase de synchronisation.

En effet, l'effort appliqué par l'actionneur et la perturbation d'accélération sont liés à ce couple et sa détermination rend donc plus précis le fonctionnement de l'actionneur.

Selon des modes de réalisation, le procédé objet de la présente invention comporte en outre une étape de mesure d'une grandeur physique de commande de l'actionneur.

Par exemple, on mesure la position de l'actionneur, le courant ou la tension qui lui sont appliqués. On peut ainsi comparer l'état de l'actionneur issu de la mesure de la vitesse de rotation de l'arbre primaire et l'état de l'actionneur attendu en fonction de la grandeur physique de commande, ce qui permet d'ajuster la commande de l'actionneur.

Selon des modes de réalisation, le procédé objet de la présente invention, tel que succinctement exposé ci-dessus comporte, en outre, une étape de détermination de cohérence entre l'effort fonction de la vitesse de rotation de l'arbre primaire mesurée et un effort déterminé à partir de la grandeur physique de commande de l'actionneur mesurée.

Selon un deuxième aspect, la présente invention vise un dispositif de régulation de l'effort d'un actionneur de synchroniseur de boîte de vitesses manuelle pilotée à double embrayage selon la revendication 6.

Selon un troisième aspect, la présente invention vise une boîte de vitesses, caractérisée en ce qu'elle comporte le dispositif objet de la présente invention, tel que succinctement exposé ci-dessus.

Selon un quatrième aspect, la présente invention vise un véhicule équipé d'une boîte de vitesses objet de la présente invention, telle que succinctement exposée ci-dessus.

Les avantages, buts et caractéristiques particulières de ce dispositif, de cette boîte de vitesses et de ce véhicule étant similaires à ceux du procédé objet de la présente invention, tels que succinctement exposés ci-dessus, ils ne sont pas rappelés ici.

D'autres avantages, buts et caractéristiques de la présente invention ressortiront de la description qui va suivre faite, dans un but explicatif et nullement limitatif en regard des dessins annexés, dans lesquels :
- la figure 1 représente, schématiquement, une boîte de vitesses BVMP de type DCT (acronyme de « Dual Clutch Transmission » pour transmission à double embrayage)
- la figure 2 représente, schématiquement, une partie d'une demi-boîte de vitesses incorporée dans la boîte de vitesses illustrée en figure 1,
- la figure 3 représente, schématiquement, un mode de réalisation particulier du dispositif objet de la présente invention et
- la figure 4 représente, sous forme d'un logigramme, des étapes mises en oeuvre dans un mode de réalisation particulier du procédé objet de la présente invention.

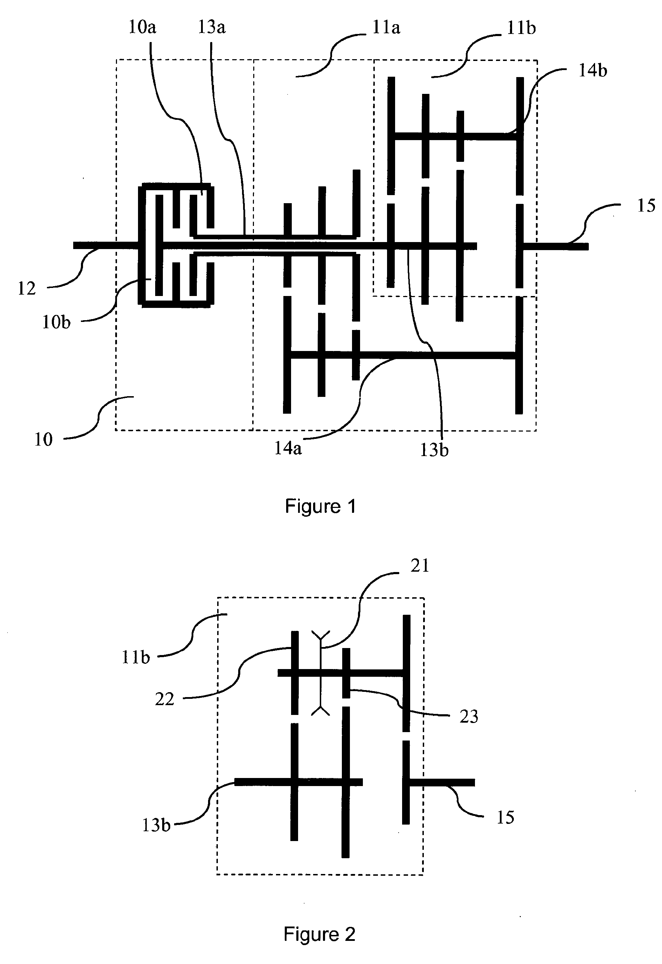

On observe, en figure 1, une boîte de vitesses à double embrayage, de type DCT Le double embrayage 10 est positionné en sortie du moteur (vilebrequin) 12. Dans le mode de réalisation décrit, la boîte comporte six rapports de vitesses de marche avant, chaque embrayage, 10a et 10b, entraîne respectivement un arbre primaire 13a et 13b portant trois pignons qui se trouvent en regard de pignons fous portés par un arbre secondaire 14a et 14b de l'une des demi-boîtes de vitesses 11a et 11b.

Un arbre de sortie de boîte de vitesses 15 relié au différentiel (non représenté) est mis en rotation par le pignon de sortie de la boîte de vitesses qui est en prise.

Dans une telle boîte de vitesses à double embrayage pilotée, l'embrayage et la sélection des rapports sont commandés par un actionneur, au moyen de vérins hydrauliques ou de moteurs électriques (non représentés). La boîte de vitesses à double embrayage peut ainsi présélectionner la vitesse supérieure ou inférieure, pour élever ou abaisser le rapport de vitesse souhaité.

Lors d'un passage de vitesse, l'actionneur est commandé/piloté pour actionner l'embrayage et passer les rapports à la place du conducteur. L'actionneur est piloté par un calculateur électronique, capable d'adapter ses actions en fonction du mode de conduite du conducteur.

Lorsque le conducteur sollicite un changement de rapport de vitesse, le calculateur reçoit une requête venant du conducteur, la traite pour contrôler le moteur thermique et piloter successivement une phase de débrayage du premier embrayage, une phase de décrabotage du rapport engagé, une sélection du rapport souhaité par le conducteur, une phase de synchronisation du rapport sélectionné, une phase de crabotage du rapport souhaité et une phase de fermeture progressive du second embrayage avec reprise du couple moteur.

La figure 2 illustre, dans une demi-boîte, ici la demi-boîte 11 b, la position d'un synchroniseur 21 entre deux pignons 22 et 23. Lors d'une phase de décrabotage, la couronne mobile du synchroniseur (appelée également manchon) se dégage du pignon craboté, de sorte que ce pignon ne soit plus lié en rotation avec son arbre secondaire. Chaque crabot est associé à un dispositif de synchronisation du type du synchroniseur 21 permettant d'amener le crabot et le pignon à engrener à des vitesses de rotations identiques avant de réaliser la phase de crabotage.

Lors d'un engagement de rapport, la phase de synchronisation génère un couple de friction qui synchronise le pignon fou du rapport que l'on cherche à engager avec le manchon lié à l'arbre secondaire. La phase de synchronisation est réalisée par l'actionneur qui exerce un effort non mesuré sur le synchroniseur 21 afin d'égaliser les régimes des pignons du rapport à engager.

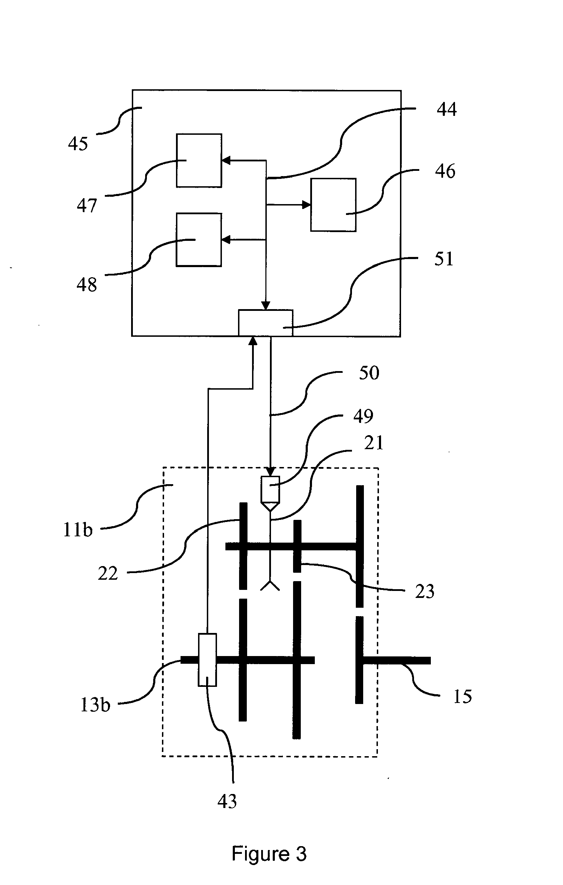

Comme illustré en figure 3, conformément à la présente invention, afin de maîtriser la perturbation de couple à la roue générée par la phase de synchronisation sur la demi-boîte de vitesses qui n'est pas en prise (embrayage ouvert), et pour connaître avec précision l'effort appliqué par l'actionneur et ainsi éviter les sollicitations excessives de la commande de la boîte de vitesses, on utilise l'information de régime, ou vitesse de rotation, provenant d'un capteur 43 adapté à mesurer la vitesse de rotation de l'arbre primaire d'une boîte de vitesses, au moins lorsqu'elle n'est pas en prise, pour commander un actionneur 49 de synchroniseur 21.

Dans des modes de réalisation, on utilise la vitesse de rotation de l'arbre primaire pour estimer l'accélération de l'arbre primaire, le couple de synchronisation, et donc l'effort appliqué par l'actionneur 49 et/ou de la perturbation d'accélération appliquée au véhicule. Puis, on commande l'actionneur 49 en fonction de l'effort appliqué et/ou de la perturbation d'accélération.

Le pilotage des embrayages 10a et 10b et des manchons pour la sélection des rapports, est commandé par un calculateur de boîte de vitesses 45, au moyen d'actionneurs (non représentés). Ce calculateur 45 comporte une mémoire de programme 46 et une mémoire de données 47 connectées à un microprocesseur 48 via un bus de communication 44. Le calculateur 45 est connecté aux différents organes de la boîte de vitesses ci-dessus décrits, et notamment l'actionneur 49, par l'intermédiaire d'un autre bus de communication 50 (du type bus CAN). Le calculateur 45 comporte en outre une interface d'entrée/sortie 51, permettant de relier les bus 44 et 50.

Les actions menées par le calculateur 45, sont ordonnancées par le microprocesseur 48. Le microprocesseur 48 produit, en réponse aux instructions codées enregistrées dans la mémoire de programme 46, des ordres destinés aux différents organes de la boîte de vitesses.

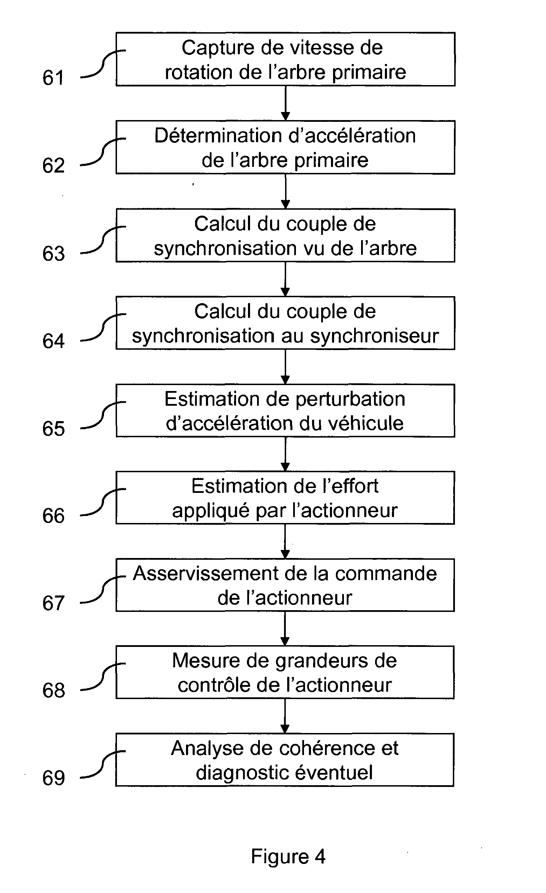

La mémoire de programme 46 comporte à cet effet plusieurs zones de programme correspondant respectivement à une suite d'étapes, telles que décrites, à titre d'exemple, en regard de la figure 4.

Au cours d'une étape 61, on mesure la vitesse de rotation, aussi appelée régime, de l'arbre primaire de la demi-boîte qui n'est pas en prise avant le changement de rapport.

Au cours d'une étape 62, on détermine l'accélération de l'arbre primaire, en calculant la dérivée de la vitesse de rotation.

Au cours d'une étape 63, connaissant l'inertie de l'arbre primaire, on calcule le couple de synchronisation vu à l'arbre primaire.

Au cours d'une étape 64, connaissant le rapport de boîte de vitesses du synchroniseur, on calcule le couple de synchronisation vu au synchroniseur. On note que l'on peut éventuellement prendre en compte la valeur de traînée de la boîte de vitesses qui est un couple supplémentaire venant s'appliquer sur l'arbre primaire.

D'après les paramètres du véhicule (démultiplication de pont, rayon de roue, masse véhicule), au cours d'une étape 65, on estime la perturbation d'accélération générée par la phase de synchronisation.

Connaissant l'efficacité théorique du synchroniseur, au cours d'une étape 66, on estime l'effort appliqué par l'actionneur.

Ainsi, on connait les perturbations générées par la phase de synchro et le niveau d'effort appliqué par l'actionneur en fonction du régime de l'arbre primaire.

Au cours d'une étape 67, en fonction des contraintes de pilotage que l'on s'est fixé, on agit sur la régulation de l'actionneur 49 pour le faire produire le niveau d'effort ou d'accélération respectant ces contraintes. Par exemple, ces contraintes donnent une valeur d'effort d'actionneur à ne pas dépasser et/ou une valeur de perturbation d'accélération à ne pas dépasser.

Au cours d'une étape 68, on mesure d'autres grandeurs physiques pour le contrôle de l'actionneur 49. Par exemple, ces autres grandeurs physiques concernent la position, le courant et/ou la tension appliquée à l'actionneur 49.

Au cours d'une étape 69, on analyse la cohérence entre l'estimation d'effort provenant de la mesure du régime de l'arbre primaire, et l'estimation d'effort obtenue à partir des grandeurs physiques mesurées pour l'actionneur 49. S'il y a un dysfonctionnement dans la commande (coincement de pièce ou synchroniseur 21 déficient, par exemple), les deux estimations sont sensiblement différentes, et on effectue un diagnostic du problème.

Ainsi, par la mise en oeuvre du mode de réalisation particulier du dispositif et du procédé objets de la présente invention illustré en figures 1 à 4 :
- on maîtrise les perturbations d'accélération que peut ressentir le conducteur lors de changements de rapports, en particulier sur les boîtes de vitesses de type DCT,
- on estime l'effort actionneur appliqué sur les synchroniseurs à partir de l'observation du régime de l'arbre primaire et
- on effectue un diagnostic de dysfonctionnement en confrontant l'estimation d'effort actionneur obtenue par l'observation du régime de l'arbre primaire et par les données internes de l'actionneur (courant, tension, position).

## Revendications

1. Procédé de régulation de l'effort d'un actionneur (49) de synchroniseur (21) de boîte de vitesses manuelle pilotée (10) à double embrayage (10a, 10b) lors d'un changement de rapport de vitesse, ladite boîte comportant deux demi-boîtes de vitesses (11a, 11b) qui comprennent chacune un arbre primaire (13b) de transmission de couple, **caractérisé en ce qu'**il comporte :
- une étape (61) de mesure de la vitesse de rotation de l'arbre primaire de la demi-boîte de vitesses qui n'est pas en prise et qui comprend le synchroniseur (21) concerné par le changement de rapport de vitesse,
- une étape (62 à 66) d'estimation, en fonction de ladite vitesse de rotation, de l'effort appliqué par l'actionneur et/ou de la perturbation d'accélération appliquée au véhicule et
- une étape (67) de commande de l'actionneur en fonction dudit effort et/ou de ladite perturbation.

2. Procédé selon la revendication 1, dans lequel, au cours de l'étape (62 à 66) d'estimation, on effectue une étape (62) de détermination de l'accélération de l'arbre primaire de la demi-boîte de vitesses qui n'est pas en prise.

3. Procédé selon l'une quelconque des revendications 1 ou 2, dans lequel, au cours de l'étape (62 à 66) d'estimation, on effectue une étape (63, 64) de détermination du couple du synchroniseur concerné par le changement de rapport de vitesse lors de la phase de synchronisation.

4. Procédé selon l'une quelconque des revendications 1 à 3, qui comporte en outre une étape (68) de mesure d'une grandeur physique de commande de l'actionneur.

5. Procédé selon la revendication 4, qui comporte, en outre, une étape (69) de détermination de cohérence entre l'effort fonction de la vitesse de rotation de l'arbre primaire mesurée et un effort déterminé à partir de la grandeur physique de commande de l'actionneur mesurée.

6. Dispositif de régulation de l'effort d'un actionneur (49) de synchroniseur (21) de boîte de vitesses manuelle pilotée (10) à double embrayage (10a, 10b) lors d'un changement de rapport de vitesse, ladite boîte comportant deux demi-boîtes de vitesses (11a, 11b) qui comprennent chacune un arbre primaire (13b) de transmission de couple, **caractérisé en ce qu'**il comporte :
- un capteur (43) adapté à mesurer la vitesse de rotation de l'arbre primaire de la demi-boîte de vitesses comprenant le synchroniseur (21) concerné par le changement de rapport de vitesse au moins lorsqu'elle n'est pas en prise,
- des moyens (46 à 48) d'estimation, en fonction de ladite vitesse de rotation, de l'effort appliqué par l'actionneur et/ou de la perturbation d'accélération appliquée au véhicule et
- des moyens (46 à 48) de commande de l'actionneur en fonction dudit effort et/ou de ladite perturbation.

7. Boîte de vitesses (11a, 11b), **caractérisée en ce qu'**elle comporte un dispositif selon la revendication 6.

8. Véhicule équipé d'une boîte de vitesses selon la revendication 7.

## Patentansprüche

1. Verfahren zur Einstellung der Kraft eines Betätigers (49) einer Synchronisierungskupplungsnabe (21) eines gesteuerten Handschaltgetriebes (10) mit doppelter Kupplung (10a, 10b) bei einem Gangwechsel, wobei das Getriebe zwei Halbschaltgetriebe (11a, 11b) aufweist, die jeweils eine Hauptwelle (13b) zur Drehmomentübertragung aufweisen, **dadurch gekennzeichnet, dass** es Folgendes aufweist:
- einen Schritt (61) des Messens der Drehzahl der Hauptwelle des Halbschaltgetriebes, das nicht eingerückt ist und die Synchronisierungskupplungsnabe (21), die von dem Gangwechsel betroffen ist, aufweist,
- einen Schritt (62 bis 66) des Schätzens in Abhängigkeit von der Drehzahl der Kraft, die von dem Betätiger angelegt wird und/oder der Beschleunigungsstörung, die an das Fahrzeug angelegt wird, und
- einen Schritt (67) des Steuerns des Betätigers in Abhängigkeit von der Kraft und/oder der Störung.

2. Verfahren nach Anspruch 1, bei dem man im Laufe des Schritts (62 bis 66) des Schätzens einen Schritt (62) des Bestimmens der Beschleunigung der Hauptwelle des Halbschaltgetriebes, das nicht im Eingriff ist, ausführt.

3. Verfahren nach einem der Ansprüche 1 oder 2, bei dem man im Laufe des Schritts (62 bis 66) des Schätzens einen Schritt (63, 64) des Bestimmens des Drehmoments der Synchronisierungskupplungsnabe, die von dem Gangschalten bei der Synchronisationsphase betroffen ist, ausführt.

4. Verfahren nach einem der Ansprüche 1 bis 3, das außerdem einen Schritt (68) des Messens einer physikalischen Steuergröße des Betätigers aufweist.

5. Verfahren nach Anspruch 4, das außerdem einen Schritt (69) des Bestimmens der Kohärenz zwischen der Kraft in Abhängigkeit von der gemessenen Drehzahl der Hauptwelle und einer Kraft, die ausgehend von der gemessenen physikalischen Steuergröße des Betätigers bestimmt wird, aufweist.

6. Vorrichtung zur Einstellung der Kraft eines Betätigers (49) einer Synchronisierungskupplungsnabe (21) eines gesteuerten Handschaltgetriebes (10) mit doppelter Kupplung (10a, 10b) bei einem Gangschalten, wobei das Getriebe zwei Halbschaltgetriebe (11a, 11b) aufweist, die jeweils eine Hauptwelle (13b) zur Drehmomentübertragung aufweisen, **dadurch gekennzeichnet, dass** sie Folgendes aufweist:
- einen Sensor (43), der dazu angepasst ist, die Drehzahl der Hauptwelle des Halbschaltgetriebes, das die von dem Gangwechsel betroffene Synchronisierungskupplungsnabe (21) aufweist, wenigstens wenn sie nicht eingerückt ist zu messen,
- Schätzungsmittel (46 bis 48) der Kraft, die von dem Betätiger in Abhängigkeit von der Drehzahl angelegt wird und/oder der Beschleunigungsstörung, die an das Fahrzeug angelegt wird, und
- Mittel (46 bis 48) zum Steuern des Betätigers in Abhängigkeit von der Kraft und/oder der Störung.

7. Schaltgetriebe (11a, 11b), **dadurch gekennzeichnet, dass** es eine Vorrichtung nach Anspruch 6 aufweist.

8. Fahrzeug, das mit einem Schaltgetriebe nach Anspruch 7 ausgerüstet ist.

## Claims

1. A method for adjusting the force of an actuator (49) of a synchroniser (21) of a semi-automatic transmission (10) with double clutch (10a, 10b) when shifting gears, said gearbox comprising two half gearboxes (11a, 11b) which each include an input shaft (13b) for torque transmission, **characterized in that** it comprises:
- a step (61) of measuring the speed of rotation of the input shaft of the half gearbox which is not engaged and which includes the synchroniser (21) affected by the gear shifting,
- a step (62 to 66) of estimating, according to said speed of rotation, the force applied by the actuator and/or the acceleration disturbance applied to the vehicle and
- a step (67) of controlling the actuator according to said force and/or said disturbance.

2. The method according to Claim 1, in which, during the estimation step (62 to 66), a step (62) is performed of determining the acceleration of the input shaft of the half gearbox which is not engaged.

3. The method according to any one of Claims 1 or 2, in which, during the estimation step (62 to 66), a step (63, 64) is performed of determining the torque of the synchroniser affected by the gear shifting during the synchronisation phase.

4. The method according to any one of Claims 1 to 3, which further comprises a step (68) of measuring a physical quantity of control of the actuator.

5. The method according to Claim 4, which further comprises a step (69) of determining the coherence between the force according to the measured speed of rotation of the input shaft and a force determined from the measured physical quantity of control of the actuator.

6. A device for adjusting the force of an actuator (49) of a synchroniser (21) of a semi-automatic transmission (10) with double clutch (10a, 10b) when shifting gears, said gearbox comprising two half gearboxes (11a, 11b) which each include an input shaft (13b) for torque transmission, **characterized in that** it comprises:
- a sensor (43) suitable for measuring the speed of rotation of the input shaft of the half gearbox including the synchroniser (21) affected by the gear shifting at least when it is not engaged,
- means (46 to 48) for estimating, according to said speed of rotation, the force applied by the actuator and/or the acceleration disturbance applied to the vehicle and
- means (46 to 48) for controlling the actuator according to said force and/or said disturbance.

7. A gearbox (11a, 11b), **characterized in that** it comprises a device according to Claim 6.

8. A vehicle equipped with a gearbox according to Claim 7.
